# EUROPEAN PATENT APPLICATION

(11) **EP 1 790 958 A1**
(43) Date of publication of application: **30.05.2007**
(21) Application number: 05025650.2
(22) Date of filing: 24.11.2005
(51) Int. Cl.: G01F 11/08, A23B 9/24

(54) **Method and apparatus for volumetric dosing**

(71) Applicant: Bayer CropScience AG, 40789 Monheim am Rhein (DE)
(72) Inventor: Oldham, Martin R., Putnoe, Bedford, MK41 9ER (GB)
(74) Representative: polypatent

(57) **Abstract**

A method and an apparatus is proposed for volumetric dosing of a predetermined or selected dose of a product in the form of powdery material, a slurry, or a suspension (16) from a multiplicity of supply sources (18), using a multiplicity of dosing chambers (5), wherein at least one dosing chamber (5) is allocated to and in fluid communication with each supply source (18), and wherein one wall segment of each dosing chamber (5) is formed by a diaphragm (4), comprising the steps of selecting a desired supply source (18), displacing a diaphragm (4) from an initial position (8) providing a maximized volume of the dosing chamber (5) allocated to the selected supply source (18) towards a final position (17) in which the volume of the dosing chamber (5) is minimized, and thereby discharging the product (16) through an output (26), and refilling the dosing chamber (5) with product (16) from the respective supply source (18), thereby returning the diaphragm (4) into its initial position (8).

## Description

The invention relates to a method and apparatus for volumetric dosing of a predetermined or selected dose of a product in the form of a powdery material. a slurry, or a suspension from a multiplicity of supply sources. Particularly, the invention provides for facilitating the measuring and dosing of liquid quantities for product discharge.

Generally, it is known to provide flow meters for many industrial uses. There are many types of volumetric flow meters known, however, the most accurate ones are those of the positive displacement type. The latter typically use some type of rotating or reciprocating mechanism in contact with the fluid to be metered. In practice problems can be encountered in some situations where the liquid to be metered or otherwise controlled contains suspended solid particles, or in other circumstances where the liquid is either non-Newtonian or has flow characteristics which render the liquid far from ideal. In such circumstances known flow meters can give inaccurate readings.

Similar problems may occur in case the liquid to be metered is corrosive with respect to parts of the flow meter, and particularly, where liquids are to be metered which are not standard products in the industries, and, therefore, interaction with the material of the parts of the flow meters are not known beforehand.

From WO 88/04225 a device for metering at least two flowable reaction components into a mixing chamber is known comprising flexible displacement elements in the form of a bellow arrangement, which sub-divide the space in a container into a component's space and into a hydraulic space. The flexible displacement element for each component is actuated by a pre-selectable hydraulic flow which can be adjusted in intensity and duration by a regulating and control unit also during metering. The arrangement proposed is described as being particularly useful for dosing abrasive and corrosive components in an industrial application particularly for the manufacture of polyurethane to provide the reaction components in appropriate proportions under high pressure into a mixing chamber, in which the components are mixed under high pressure within milliseconds to initiate appropriate chemical reaction of the components. The arrangement described in closer detail is particularly adapted to a continuously dosing of such chemical components. As a further advantage it is described that the bellow arrangements within the container space may have a large diameter to travel ratio allowing an arrangement of compact design compared to usual plunger arrangements used for the same purpose. For dosing abrasive components it is particularly proposed to make the bellows from austenite stainless steel. As a further advantage of such a material it is mentioned that an easy sealing may be obtained by welding the bellow to a flange or the bottom of the container. However, due to the arrangement with appropriate electronic control and the required hydraulic pumps the costs for an arrangement as proposed are quite significant and may be acceptable only for the described application to continuously manufacturing of plastics materials in large industrial scale.

However, the use of bellow arrangement may cause problems when dosing dispersions. A variation in flow rates on actuation of the bellows over the container with lower flow rates at the circumference of the bellows will likely cause a buildup of solid particles over the time which may adverse the accuracy of dosing the dispersion with constant solid particle content during long-time operation.

From EP 0 084 401 A1 a process for measuring quantities of gases and for delivering predetermined amounts of liquids is known using an arrangement of interconnected liquid containing vessels, in which a gas is introduced into one of the vessels for determination of a quantity of a gas formed in a chemical process, for instance, the quantity of carbon dioxide produced by a fermenting dough, in relatively large discrete steps.

From US 5,251,489 A a fluid flow measuring device having a positive displacement piston in a precise bore glass flowtube is known with flexible diaphragms at opposite ends of the flowtube to seal the flowtube from the ambient environment. The flowtube is filled with a pure fluid or a gas for uncontaminated operation of the piston. Means for optically detecting the movement of the piston between selected positions along said flowtubes are provided. Further, there are means provided to equalise the pressure in the sealed-off upper and lower piston chambers on opposite sides of the piston. The apparatus is intended for a short time measurement of a gas flow by detecting the time the piston needs to move between the optical detectors and to compute the flowrate from the displacement time.

From WO 95/15520 a system is known for the controlled dosing of a fluid, for instance for colorants for coating applications in car manufacturing with a determination of flow rates only from quite complex real-time differential pressure measurements, which requires the dynamic viscosity of the fluid in response to the temperature being introduced into the calculation, and further to measure the temperature of the fluid, and to introduce this temperature measurement results also into the calculation, to obtain figures for the flow rate. The installation of this system is quite costly and proper operation requires reliable and accurate measurement of different characteristics of the fluid, and further requires significant computing power for the real-time calculation. The system disclosed is intended to become part of a larger CAM system.

It is an object of the invention to provide a relatively simple and low cost dosing system for volumetric dosing of a predetermined or selected dose of a product from a multiplicity of supply sources which enables a precise batch wise dosing of products, particularly liquid suspensions comprising a significant amount of solid particles, which is user-operable and reliable over long term maintenance-free operation.

This object is achieved by a method and apparatus according to the invention as defined in the appended claims.

This object is achieved by a method for volumetric dosing of a predetermined or selected dose of a product in the form of powdery material, a slurry, or a suspension from a multiplicity of supply sources, using a multiplicity of dosing chambers, wherein at least one dosing chamber is allocated to and in fluid communication with each supply source, and wherein one wall segment of each dosing chamber is formed by a diaphragm, comprising the steps of selecting a desired supply source, displacing a diaphragm from an initial position providing a maximized volume of the dosing chamber allocated to the selected supply source towards a final position in which the volume of the dosing chamber is minimized, and thereby dispensing the product through an output, and refilling the dosing chamber with product from the respective supply source, thereby returning the diaphragm into its initial position.

The method according to the invention allows the distribution of batches of a product from a multiplicity of supply sources with an easy to use and reliable method allowing repeatedly the distribution of volumetric batches of products from a selected supply source, further allowing the use of low cost, simple and reliable apparatus components. The possibility to use low cost equipment and the advantages of the method according to the invention allow the use by a customer of the products without significant special education or training even for products possibly harmful when misused. In a preferred embodiment of the method as above distributing the product through an output is subsequent to opening of an outlet valve, preferably wherein the step of refilling the dosing chamber with products from the respective supply source is subsequent to closing of the outlet valve and opening of a filling valve. Thus, both dripping of product through the outlet as well as an interference between the product flow for the filling action and the distribution flow is avoided, thus, improving the accuracy of the dosed batch.

In a particularly preferred embodiment of the method the step of displacing the diaphragm is performed by distributing a metered volume of a transmission liquid into a driving chamber sealed by the diaphragm of the respective dosing chamber, particularly if the distributed volume of transmission liquid is controlled to a predetermined or selected amount. This particularly useful embodiment allows a high accuracy of the volumetric dosing from the dosing chamber as the volume of distributed product is exactly the same as the volume of the transmission liquid used to displace the diaphragm. Metering of the volume of the transmission liquid into the driving chamber sealed from the dosing chamber by the diaphragm can be performed with high accuracy at relatively low costs as the transmission liquid can be selected from a wide range of available technical liquids which do not interfere with the materials used particularly in a low-cost high-accuracy flow meters, having appropriate viscosity at the typical operation temperatures of an equipment used for performance of the method and practically no compressibility at the relatively low pressure. Useful transmission fluids may include silicone oil, common technical hydraulic oils or available technical hydraulic liquids.

Preferably, the controlling of the distributed volume is performed by applying pressure to the transmission liquid by providing a pressurised gas onto a diaphragm inside an actuation device divided by the diaphragm into a portion for receiving the pressurised gas and a portion containing the transmission liquid, more preferably if the provision of pressurised gas is controlled through a gas inlet valve and a ventilation valve. The use of a pressurised gas as an energy source for driving the transmission liquid is easily controllable for controlling the flow of pressurised gas into the actuation device and venting the actuation device when the predetermined amount is achieved. Further, venting of the actuation device enables the transmission fluid to return whilst the dosing chamber is refilled with product. Pressurised gas is easily available both compressed in canisters or through a distribution system. Many plants and even farms are equipped with installations for distributing pressurised air anyway, so this source can be used at practically no extra costs. Pressurised gas as nitrogen or carbon dioxide may be used where flammable products are handled nearby.

In an alternative embodiment of the preferred method according to the invention the controlling of the distributed volume is performed by displacing the diaphragm through a controlled linear drive. Mechanical displacement of the diaphragm can be easily realised through available linear drives including appropriate control equipment. Typical controllable linear drives allow highly accurate controlled displacement in a wide range of displacement speeds. The controls of any usual drives are adapted for direct connection to typical computers allowing easy programming and recording of the operation of the linear drive. This method allows the realisation of equipment for use with a method at very low costs particularly where there is only a small number of supply sources as the arrangement with the transmission fluid and volumetric metering of the distributed transmission fluid can be omitted.

In a particularly advantageous embodiment of the method according to the invention the controlled displacement of the diaphragm is performed by activating a stepper motor in geared engagement with a rod connected to the diaphragm by a dedicated number of steps. This allows easy performing the method according to the invention through usual microcontroller equipment with a relatively high accuracy even in simple installations.

To obtain a high accuracy over a broad range of dose volumes a volumetric amount of distribution is allocated to each dedicated step of the stepper motor between the outmost positions of the diaphragm in a table of characteristic values stored in a memory device for controlling through a microcontroller means. A high accuracy even without volumetric flow metering can be achieved where the distributed volume is a non-linear function of the number of steps of the stepper motor, wherein the function is determined for each specific dosing chamber and product from calibration and the obtained function is stored in the memory device in the form of a table of characteristic figures. This minimises any inaccuracy originating from the non-linear relation between longitudinal displacement of the centre of the diaphragm versus volumetric displacement and further non-linearity originating from the elasticity of the diaphragm.

In a most preferred embodiment of the method according to the invention the use of a linear drive and the use of the transmission fluid is combined and the linear drive is used for distributing a metered volume of the transmission liquid. This embodiment particularly allows a relatively simple arrangement of the equipment required for performing the method for a larger number of supply sources available for selection.

Use of a linear drive for driving the transmission fluid instead of the source of pressurised gas avoids an inaccuracy originating from the compressibility of the gas and pulsations induced by switching the gas inlet valve and/or the ventilation valve.

The method of the invention is particularly useful for treating seeds with the product supplied through the output.

The objects of the invention are further achieved by an apparatus for volumetric dosing of a predetermined or selected dose of a product in the form of a powdery material, a slurry, or a suspension from a multiplicity of supply sources, comprising at least one diaphragm pump per supply source, wherein each diaphragm pump is divided by a diaphragm into a sealed dosing chamber and an actuation chamber opposite to the dosing chamber, each dosing chamber being in fluid communication with an outlet and one of the supply sources, at least one source selector for selection of the desired supply source, and means for displacing the diaphragm of the diaphragm pump allocated to the selected supply source, thereby ejecting an amount of product from the diaphragm pump in response to the displacement of the diaphragm.

The apparatus according to the invention provides for relatively low cost equipment, particularly useful for performing the method according to the invention, which allows a long term operation of the equipment without the necessity of ongoing maintenance by specialists.

In a particularly preferred embodiment of the apparatus according to the invention, the means for displacing the diaphragm of the at least one diaphragm pump further comprises a master pump of the diaphragm type, having a working compartment defined on one side of the diaphragm and an actuation side of the diaphragm opposite to the working compartment, a transmission liquid in fluid connection with the actuation chamber of any diaphragm pump and working compartment of the master pump, valve means for selectable fluid connection for the transmission liquid between the working compartment of the master pump and the actuation chamber of any of the diaphragm pumps in response to the source selector, and a flow meter arranged between the working compartment of the master pump and the valve means.

This embodiment of the apparatus is particularly useful for a large number of selectable supply sources, as the most costly components particularly for measuring the volumetric flow can be shared for distribution from all selectable supply sources, thus, providing both a high accuracy dosing as well as relatively low costs for the equipment, enabling a broad range of customers to benefit from highly accurate dosing on site and making use of the method according to the invention.

In a further useful embodiment of the apparatus according to the invention, the apparatus further comprises for each diaphragm pump an outlet valve for connecting the dosing chamber of a selected diaphragm pump to an output of the apparatus for discharging the dosed product, and a filling valve for each diaphragm pump operable alternatively to the outlet valve, for connecting the dosing chamber of the selected diaphragm pump to the respective supply source. This arrangement prevents adversely effecting the accuracy of the dosing performance by product dripping from the outlet or interference of the filling and distributing operations of the diaphragm pump.

In a preferred embodiment of the apparatus according to the invention the apparatus further comprises a gas inlet valve and a ventilation valve connected to a compartment formed on the actuation side of the diaphragm of the master pump, the gas inlet valve being operable for controlled connection to a source of pressurised gas, the ventilation valve being operable to vent the said compartment to the environment. This arrangement allows a cost-saving operation of the apparatus by providing the opportunity to drive the apparatus from a typical compressed air distribution installation available in many plants and even farms.

In an advantageous alternative embodiment of the apparatus according to the invention the actuation side of the diaphragm of the master pump is connected to a linear drive arrangement for controlled displacement of the diaphragm. This particularly useful embodiment of the apparatus provides a relatively low-cost arrangement as useful controlled linear drives are readily available in the market and such apparatus provides for high performance, high accuracy dosing and avoids any disadvantages originating from the compressibility of a pressurised gas used for driving the transmission fluid, and particularly from pulsation originating from switching gas inlet and ventilation valves, thereby adversely affecting the accuracy of the dosing performance. This embodiment is particularly useful in connection with a greater number of selectable supply sources.

Alternatively, and particularly useful for a small number of selectable supply sources, may be two, is an apparatus according to the invention wherein the means for displacing the diaphragm of the at least one diaphragm pump is a linear drive arrangement for controlled displacement of the diaphragm.

The linear drive arrangement of a preferred apparatus according to the invention comprises a stepper motor and a rod connected to the diaphragm, wherein the stepper motor is in geared engagement with the rod, particularly wherein the rod comprises a tube like portion internally threaded over at least part of its length, and a threaded bolt like portion, one of the tube like and bolt like portions being secured to the rotatable drive shaft of the stepper motor for rotating with the drive shaft, and the other of the tube like and bolt like portions being non-rotatably fixed to the diaphragm of the master pump, so as to obtain a defined linear displacement of the diaphragm in response to certain rotational steps of the stepper motor. Such embodiment of the apparatus according to the invention provides a relatively simple and less costly arrangement for high accurate displacement of the diaphragms, particularly for direct and controlled electrical driving of the stepper motor through a usual microcontroller means.

In a more further preferred embodiment of the apparatus according to the invention the apparatus further comprises a microcontroller means for controlled driving of the stepper motor, and a memory device containing data of a table of characteristic figures for volume displacement in response to each step of the stepper motor from the initial position of the diaphragm to its final position, particularly, if further comprising an incremental rotary encoder for detecting rotational movements of the drive shaft and the portion of the rod connected to the drive shaft, and electrically connected to the microcontroller means for monitoring appropriate rotation of the rod portion in response to the output signals of the microcontroller means for driving the stepper motor.

This arrangement allows easy and efficient controlled operation of the apparatus through a microcontroller means. Although the stepper motor allows direct control of rotation through applying appropriate pulses of electrical current to the stepper motor, the provision of an additional encoding means provides for increased operational security of the apparatus. With no encoding means there is no direct feedback for the microcontroller in case the stepper motor does not follow the applied number of pulses due to an overload or any kind of blocking somewhere in the apparatus. Compared to other kinds of electrical motors the torque of a stepper motor is relatively limited. Therefore, this limited driving torque can be used as an overload protection for the mechanism preventing damage to the mechanism if movement of the mechanism or any of the diaphragms is obstructed for whatever reason. Providing the encoding means allows a close loop feedback so that the microcontroller may switch-off the apparatus and provide an error message requesting servicing of the apparatus, thus, preventing the distribution of inaccurate doses due to increased friction, or damage of any parts of the apparatus, or caused by undesired variations in the characteristics of the fluids from the supply sources, e.g. inappropriate content of solid particles, undesired agglomeration of particles in the suspension, or the like.

In a further useful embodiment of the invention the flow meter is a volumetric flowmeter of the positive displacement type, thus, providing most possible accuracy.

In a further useful embodiment of the invention the apparatus further comprises a batch volume control means for controlling the dosed volume by controlling the displaced volume of transmission liquid, particularly, wherein the batch control volume control means is integrated into the microcontroller means for highest possible accuracy of the dispensed batch of product, particularly in an apparatus allowing free pre-selection of the dispensed batch volume.

These and other aspects and advantages of the invention are more readily apparent from the following description of exemplary embodiments of the invention shown in the accompanying drawings, in which
- Figure 1: is a simplified cross-sectional view of a suitable diaphragm pump 1 for use with the method and apparatus according to the present invention;
- Figures 2 and 3: show the principle operation of diaphragm pump 1 with an embodiment of the invention;
- Figure 4: schematically shows a system comprising a first embodiment of an apparatus according to the invention for performing a first embodiment of the method the invention;
- Figure 5: schematically shows a system comprising a second embodiment of an apparatus according to the invention for performing an embodiment of the method the invention;
- Figure 6: shows a schematically cross sectional view of an alternative embodiment of a master pump and/or a diaphragm pump according to the invention; and
- Figures 7 and 8: show a further alternative embodiment of a dosing apparatus and method in different operational states.

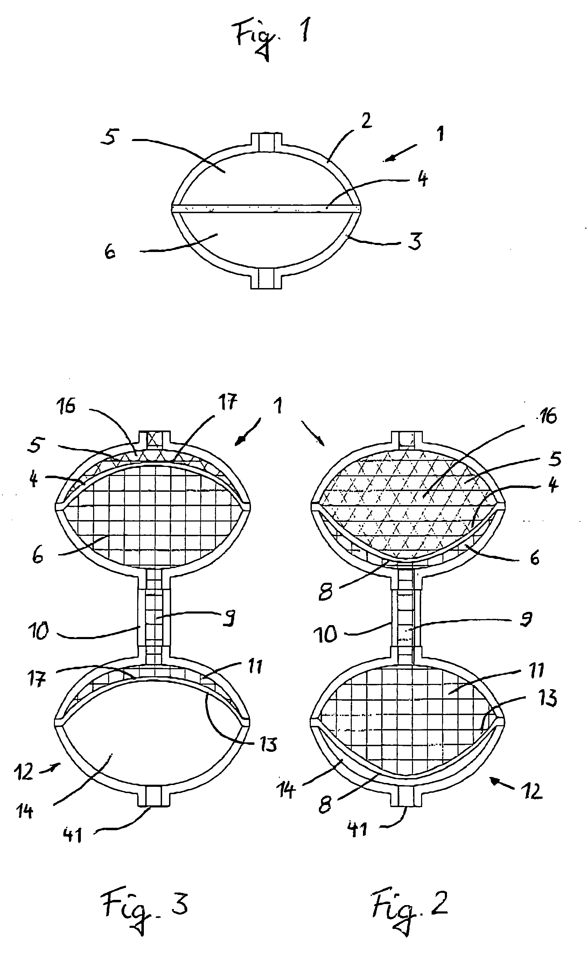

In figure 1 a simplified cross-sectional view of a suitable diaphragm pump 1 for use with the method and apparatus according to the present invention is shown. A typical diaphragm pump 1 consists of two housing parts 2 and 3 and a membrane or diaphragm 4 fixed between the housing parts 2 and 3. The housing shells 2 and 3 can be made of any suitable metal or plastic material. The material for the housing shells should be appropriately selected in view of the product to be dosed through the apparatus to avoid undesired interaction between the housing material and the product, including corrosion of the housing parts, or a degradation of the product. Further, when selecting metal material for the housing parts the material of other parts of the apparatus should be considered to avoid electrochemical corrosion. The material for the diaphragm 4 is preferably an elastic material suitable for membranes and particularly having appropriate resistance properties to any fluid coming in contact with the membrane. Suitable materials for such a membrane may include nitrile butadiene rubber, fluorocarbon rubbers and the like. The housing parts 2 and 3 of the diaphragm pump may have flanges (not shown) for securing the housing parts 2 and 3 together, thereby fixing the diaphragm 4 in between. Depending on the material selected, other methods like the use of adhesive or welding of the housing parts 2 and 3, e.g. ultrasonic welding, as known in the art.

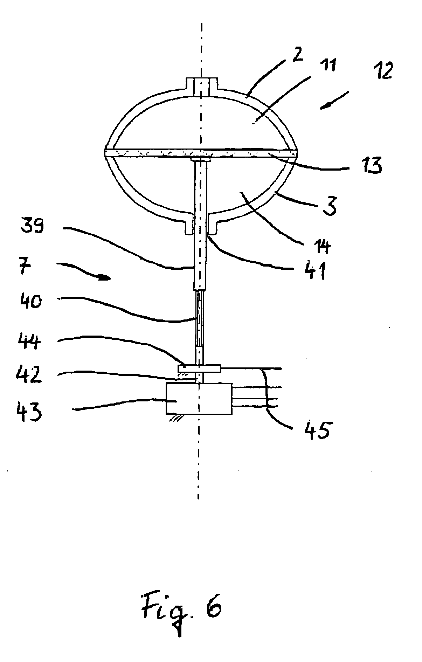

The diaphragm 4 divides the interior of the diaphragm pump 1 into a dosing chamber 5 and an actuation chamber 6 opposite to the dosing chamber 5. Each of the dosing chamber 5 and the actuation chamber 6 has an opening through the corresponding housing part 2 and 3 for fluid connection or passing of a mechanical actuation member like a rod 7, shown in figure 6.

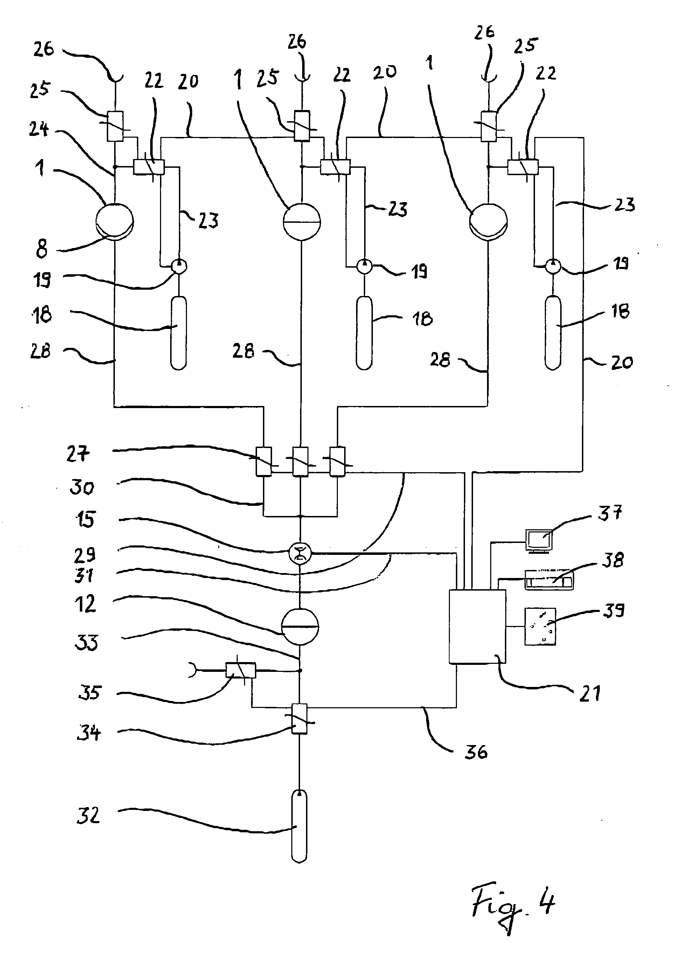

Figures 2 and 3 show the principle operation of diaphragm pump 1 with an embodiment of the invention. In the schematic drawings of figures 2 and 3 the dosing chamber 5 is filled with a product to be dosed, for instance in the form of a suspension or a slurry 16 of seed treatment. In figure 2 the diaphragm 4 assumes an initial position 8 providing a maximised volume for the dosing chamber 5 and a minimised volume for the actuation chamber 6. In the arrangement shown in figures 2 and 3 the displacement of the diaphragm 4 is performed through transmission liquid 9 inside the actuation chamber 6 and in fluid communication through appropriate hosing, generally depicted with reference number 10, with a working compartment 11 formed in a master pump 12 of the diaphragm type, in general similar to the diaphragm pump 1.

The master pump 12 acts as the actuation device for displacement of the diaphragm 4 of the diaphragm pump 1. The master pump 12 is also comprising a diaphragm 13 of the same type as the diaphragm 4, dividing the interior of the actuation device or master pump 12 into a portion for containing the transmission liquid 9, that is the working compartment 11, and a portion on the actuation side 14 of the diaphragm 13, for instance for receiving a pressurised gas (not shown) to drive the diaphragm 13, and thus the transmission fluid 9. Diaphragm 13 may differ in material and design from diaphragm 4 for best compatibility with the transmission liquid 9 and gas used. The material may be selected for preventing or minimizing diffusion of the gas into the transmission liquid 9. From its initial position shown in figure 2, both diaphragms 13 and 4 are moved to their final position 17 providing a minimised volume of the dosing chamber 5. The volume thus ejected from the dosing chamber 5 is exactly the same as the additional volume of transmission fluid 9 transferred into the actuation chamber 6 of the diaphragm pump 1.

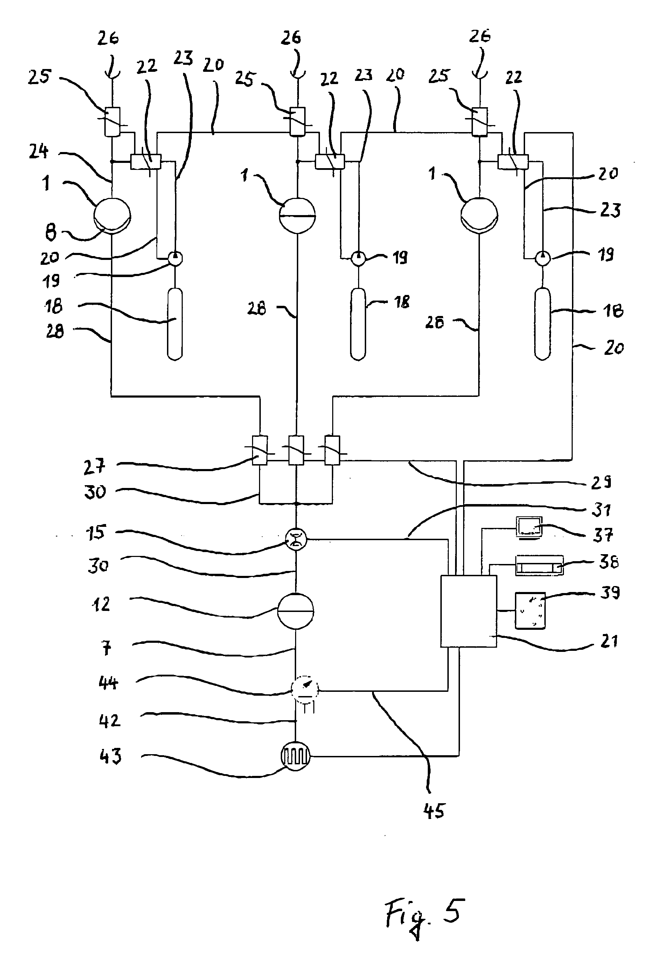

Within the hosing 10 for providing a fluid connection from the master pump 12 to the diaphragm pump 1 a flow meter 15 can be introduced as shown in figures 4 and 5. The flow meter 15 is preferably of the positive displacement type providing most exact volumetric measurements under typical operational conditions for an apparatus for dosing of a product according to the invention. Such a flow meter 15 may be of conventionally available type as the interior of the flow meter 15 only contacts the transmission fluid 9. The transmission fluid 9 may be selected from appropriate available transmission fluids like silicone oil, hydraulic oil or the like available in a wide range of viscosity types, which may be inert to the surfaces of the interior of the flow meter 15, thus, preventing corrosion or wear to the flow meter 15. Therefore, there is no need for expensive types of flow meters 15 including stainless steel or other corrosion and wear resistant materials. Further, the operation of the flow meter 15 is not adversely effected by finely milled solid particles comprised in the suspension 16 to be dosed which otherwise would built up in the flow meter 15 or providing excessive wear of the moving parts of the flow meter 15, and possibly blocking the same.

The type of transmission liquid 9 can be easily selected to provide a low compressibility rate in view of the low operating pressures required for dosing from the apparatus according to the present invention, that is practically no compressibility under operating conditions. Such a transmission liquid 9 should have close to "ideal" fluid properties under the operating conditions of the apparatus according to the invention for best dosing accuracy.

In figures 4 and 5 installations comprising different embodiments of an apparatus according to the invention are schematically shown. Each of the apparatuses shown is capable of performing the method of the invention. Starting with figure 4, the installation comprises a multiplicity of supply sources in the form of three canisters 18, each comprising a different product to be dosed, for instance different seed treatment suspensions 16. Other embodiments may comprise 2, 4, 5, 6, 7, 8, or 9 different supply sources, or even more than 9. Practically, each supply source also comprises a supply pump 19 for providing the suspension 16 from the canister 18 to the respective dosing chamber 5 of a diaphragm pump 1. Each supply pump 19 may be connected through an electrical wiring 20 with a control unit 21.

Electrical wiring 20 may comprise dedicated wires for each device connected to the wiring 20, or may comprise a common digital bus. The control unit 21 may collect data from each connected device and send commands through the bus for controlling each device as commonly known in the art. Of course, electrical wiring 20 may be replaced partially or totally by optical glass fibre cables or wireless communication paths.

Each supply pump 19 is in fluid communication with a filling valve 22 through supply hosing 23. Filling valve 22 may provide for a fluid path with the dosing chamber 5 of the respective diaphragm pump 1 through outlet hosing 24**.** The dosing chamber 5 is in fluid communication with an outlet valve 25 which may provide for providing a fluid path to the output 26 for discharging the dosed suspension 16. Output 26 may be a dedicated output for each of the diaphragm pumps 1, or a common output , e.g. connected to further machinery for processing the distributed suspension 16.

Filling valves 22 and outlet valves 25 are connected to electrical wring 20 for individual control. Control is performed such that no more than one of the two valves 22 and 25 is open at a time, or both closed. This is to prevent suspension 16 provided through supply pump 19 from escaping to the output 26 without being appropriately measured, thus making dosing performance inaccurate and unacceptable. Although filling valve 22 and outlet valve 25 are shown as individual solenoid switching valves it is evident for a person skilled in the art that e.g. an integrated 3/3 directional control valve may be used instead, having three inlet/output ports for connecting the dosing chamber 5, the supply pump 19 and the output 26, and which may be driven for three positions, namely connecting the dosing chamber 5 to the output 26, or to the supply pump 19, or closing all. Also for this kind of valves solenoid types may be used for electrical actuation.

Diaphragm pump 1 of the kind described with reference to figures 1, 2, and 3 may be used. Both the left and right diaphragm pumps 1 are shown with the diaphragm 4 in its initial position 8 with corresponding dosing chambers 5 being filled with product suspension 16, whilst the diaphragm pump 1 shown in the middle is in an intermediate operational state as it occurs during dosing of product from the dosing chamber 5 to the output 26 or refilling suspension 16 from the canister 18 to the dosing chamber 5, approximately half way between the initial position 8 of the diaphragm 4 and its final position 17.

The actuation chambers 6 of each of the diaphragm pumps 1 are in fluid connection with the working compartment 11 formed in master pump 12 through hosing 10. Hosing 10 comprises transmission hosing 28, valve means 27 and actuation hosing 30. The actuation chambers 6 are in fluid communication with valve means 27 through transmission hosing 28. The hosing 28 and actuation chambers 6 contain transmission liquid 9. Valve means may comprise a number of dedicated solenoid switching valves 27, one for each diaphragm pump 1. Valves 27 are controlled by the control unit 21 through electrical wiring 29 such that no more than one actuation chamber 6 of the diaphragm pumps 1 is in fluid communication with a working compartment 11 of the master pump 12. For the embodiment shown with three diaphragm pumps 1 the set of individual switching valves 27 may be replaced e.g. by a 4/3 or 4/4 directional control valve. A 4/4 directional control valve may additionally allow to disconnect the transmission liquid fluid paths from each of the actuation chamber 6 of the diaphragm pumps 1 from the working compartment 11 of the master pump 12. However, for a greater number of supply sources it is probably more cost effective to use a respective number of dedicated solenoid switching valves which are readily available as standard hydraulic control components.

Valves 27 are in fluid connection with working compartment 11 of master pump 12 through actuation hosing 30. Within the actuation hosing 30 a flow meter 15 is arranged for measuring the volume of transmission liquid 9 displaced through actuation hosing 30. Preferably, actuation hosing 30 and transmission hosing 28 are formed from rigid tubing to avoid metering errors originating from elasticity of hosing material. The flow meter 15 is preferably of the positive displacement type. Flow meter 15 comprises electrical encoding or sensor means (not shown) for providing an electrical or optical signal corresponding to the volume metered. Of course, it is not necessarily required that the flow meter 15 provides an electrical signal including an information about the flow direction as this information may be logically obtained from the signals sent from the control unit 21 to filling valves 22, outlet valves 25 and supply pumps 19, if required at all. In fact this information is not required to provide proper dosing of the suspension from the output 26, but may be useful to improve the reliability of the apparatus, particularly to detect leakage of transmission liquid 9 in the system.

Control unit 21 may control the operation of the gas inlet valve 34 through wiring 36 for providing a flow of pressurised gas into the portion 14 for receiving pressurised gas of master pump 12 to displace diaphragm 13 of the master pump 12, thereby displacing transmission liquid 9 from the working compartment 11 of the master pump 12 through transmission housing 28, flow meter 15 and valve means 27 to the actuation chamber 6 of the selected diaphragm pump 1, thus, displacing an amount of suspension 16 of the same volume as the displaced volume of transmission liquid 9 from the dosing chamber 5 through the outlet valve 25 to output 26. Supply of pressurised gas from the source of gas 32 through actuation side 14 of the master pump 12 is limited by switching off the gas inlet valve 34 and opening of ventilation valve 35 to vent the pressurised gas from the master pump 12 to the environment to stop further displacement of transmission liquid 9.

Use of pressurised gas for activation of the master pump 12 has certain disadvantages, mainly originating from compressibility of the gas, which limits exact control of displacement of transmission liquid, and, thus dosing of suspension 16. Variations in metered output due to time delays in valve actuation, air compressibility, etc., may be compensated for by conventional A.O.C. (automatic overrun compensation) of known metering control systems. The use of pressurized gas may further cause problems by pulsations occurring in the gas directed to the actuation side 14 of the diaphragm 13 of the master pump 12 particularly originating from switching operation of valves 34 and 35. Such pulsations may have undesired effect on the doses of suspension 16 actually dispensed from the outlet 26, even occurrence of pulsations may be reduced by using of valves of the servo type or the use of flow control valves for the gas inlet valve 34 and ventilation valve 35.

Preferably, supply canisters 18 comprise level indicators of the known art to provide a signal to the user if any of the canisters 18 runs empty to attend to a timely replacement or refill of the canister 18. The formation of air bubbles during filling of the dosing chambers 5 can be reduced by providing canisters upside down having an outlet for connecting to the supply hosing 23 at the lowest position at the canister 18, thus, ensuring that the outlet to the supply hosing 23 is covered with suspension 16 at all times. Preferably, control unit 21 will shut off the apparatus once an empty canister 18 is detected to avoid improper dosing of the product through output 26.

Flow meter 15 is connected to the control unit 21 through electrical wiring 31, which of course may have any other useful kind of providing signal transmission to control unit 21 as explained for electrical wiring 20 above.

Inside master pump 12 a diaphragm 13 divides the interior space into a working compartment 11 as a portion for containing the transmission liquid 9 and a portion for receiving pressurised gas on the actuation side 14 of the diaphragm 13 opposite to the working compartment 11. In the embodiment shown, the actuation side 14 of the master pump 12 is connected to a source of pressurised gas 32 through tubing 33 and a gas inlet valve 34 for control of entry of pressurised gas into the portion for receiving pressurised gas 14 of the master pump 12. The source of gas 32 may be a usual pressurised canister containing compressed air, or, if the operating environment of the apparatus require special fire or explosion preventing measures, another suitable compressed gas as nitrogen or carbon dioxide. The source of pressurised gas 32, however, may also be a connection to a usual installation for providing compressed air from a central compressor through a network of tubing and connectors, as it is typically on hand in factories or even in farms.

Tubing 33 is also connected to a ventilation valve 35. Although ventilation valve 35 and gas inlet valve 34 are shown as dedicated solenoid switching valves, the same function may be provided by an integrated 3/2 directional control valve. As already explained, electrical wiring 36 may be replaced by any other suitable signal and power transmission equipment as described with respect to electrical wiring 20 above.

Control unit 21 preferably comprises a microcontroller means for controlling the operation of the system. Suitable single board microcontroller means are readily available in the market as standard components and may be programmed as required through conventional programming means. For instance, microcontrollers from the 8035 microcontroller family have been proven as reliable and low costs microcontroller for such a purpose- The microcontroller means comprises a memory device for storing characteristic figures for providing volumetric data in SI units responsive to the data obtained from the flow meter 15. The figures in the SI units may be displayed on display 37 which may comprise any useful type of display, like a LCD display, TFT flat-screen or the like. The display 37 may include or consist at least of indicators to provide a "ready" state information, a "in operation" state information, or a "out of order, service required" status indication. Of course, respective information may be displayed on a display 37 allowing displaying text messages or symbols.

Although not shown, control unit 21 may be connected to standard computer equipment through a local area network or a wide area network for supervision by maintenance staff or for providing data about the amounts and types of suspension 16 supplied from the system through output 26 for controlling of further equipment or documentation purposes. Of course, control unit 21 may also be connected to a printer for printing records of batches of product supplied through the output 26, or any status information, including level information from canisters 18.

Control unit 21 may be further connected to a keyboard 38 which may be of any type common in industrial applications. Keyboard 38 may be used for programming of control unit 21 through authorised service personnel or the user may be allowed to input the desired volume of each suspension 16 to be dosed as required. Keyboard 38 may also be used to request an operator to type a security code, if desired to prevent unauthorised operation of the system.

Further, control unit 21 is connected to a source selector means 39 allowing a user to select the canister 18 from which he wants to receive a dose of product 16. The source selector means 39 may be a selection switch of any usual kind of mechanical or electronic switch, including a rotational switch with dedicated positions for each canister 18 available. The source selector means 39 may alternatively comprise of a number of push buttons corresponding to the number of canisters 18 available. The keyboard 38 may also serve as the source selector means 39 allowing to enter a corresponding code or number for the canister 18 desired.

An alternative embodiment to the apparatus shown in figure 4 is schematically depicted in figure 5. The main difference is the actuation of the diaphragm 13 of the master pump 12 mechanically through a linear drive arrangement for controlled displacement of the diaphragm 13. Particulars of this linear drive arrangement are explained with reference to figure 6 showing a schematically cross-sectional view of the master pump 12 and the linear drive arrangement.

In the embodiments shown in figures 5 and 6 the diaphragm 13 of the master pump 12 is secured to a rod 7. The rod 7 preferably comprises at least one tube like portion 39 internally threaded and a the bolt like portion 40 having external threads adapted to the internal threads of the tube like portion 39. Preferably, the tube like portion 39 is non-rotatably fixed to the diaphragm 13, or commonly known guide means are arranged at the interface between the tube like portion 39 and bottom opening 41 of the master pump 12 as known in the art to prevent relative rotation between the tube like portion 39 and the housing of the master pump 12. This can be achieved for instance through a hexagonal cross-section both of the bottom opening 41 and the exterior of the tube like portion 39. Accordingly, if the bolt like portion 40 is screwed into the tube like portion 39 and at the same time fixed in axial direction, the diaphragm 13 is pushed upwards or pulled downwards in response to turning of the bolt like portion.

Bolt like portion 40 is connected to or forms part of the rotatable drive shaft 42 of a electrical stepper motor 43 mounted in fixed relationship with respect to the housing of the master pump 12. The stepper motor 43 is electrically connected to the control unit 21, e.g. through appropriate driver circuitry (not shown) for stepwise controlling of the rotation of the stepper motor 43. In response to the number of steps the stepper motor 43 is actuated in one or the other rotational direction, the diaphragm 13 of the master pump 12 is displaced by a certain distance, the distance being proportional to the number of steps, and the number of steps per full turn of the stepper motor 43 (the latter is a fixed characteristic parameter of the stepper motor 43), and the pitch of the threads of the tube like and the bolt like portions 39 and 40 of the rod 7. For instance, for a stepper motor 43 having 36 steps per full tum, that is 10° per step, and a pitch of the threads of 0,5 mm, actuating the stepper motor 43 by one step will cause a displacement of the diaphragm 13 by 13,9 µm. Of course, pitch and resolution of the stepper motor 43 can be selected as appropriate. As the diaphragm 13 is fixed between the housing parts 2 and 3 of the master pump 12, the volume displaced from the working compartment 11 is a non-linear function of the longitudinal displacement of the centre of the diaphragm 13, and thus a non-linear function of the number of actuated steps of the stepper motor 43.

Alternatively, the linear drive arrangement may comprise a gear rod and a pinion gear driven by the stepper motor.

However, the characteristic figures for this non-linear function can be obtained from a calibration measurement and the table of characteristic values is preferably stored in the memory device of the control unit 21. This may provide for a direct control of the distributed volume of suspension 16 by actuating the stepper motor 43 by the number of required steps from the initial position 8 of the diaphragm 13 towards its final position 17. However, for most accurate measuring of the doses of a product delivered from the output 26 it is recommended to have the flow meter 15 in the transmission hosing 28 as described with the previous embodiment.

In a further improved embodiment an incremental rotary encoder 44 is secured to the drive shaft 42 or bolt like portion 40 to provide a signal corresponding to the rotary steps performed by the stepper motor 43 via wiring 45 to the control unit 21. Preferably, the rotational resolution of the encoder 44 is selected as being twice or more of the resolution of the stepper motor 43 to obtain most reliable data of the actual rotation of movement of the bolt like portion 40. The information obtained from the encoder 44 may be used to calculate the displaced volume according to the table of characteristic figures in the memory and/or simply for monitoring whether the stepper motor 43 actually performed the number of steps according to the signal output from the control unit 21 to the stepper motor 43. Conventional stepper motors 43 provide for quite limited driving torque only. If the load of the drive shaft 42 exceeds the maximum torque of the stepper motor 43, the drive shaft 42 "slips" relative to the counted steps, thus causing no displacement of the diaphragm 13 as desired. More particularly, such slipping causes the control unit 21 to use inappropriate characteristic figures from the stored table due to a shift of the operating point within this nvn-linear function of displacement of a product in response to the steps of the stepper motor 43. By monitoring the actual rotational movement of the drive shaft 12 or the bolt like portion 40 occurrence of such errors may be avoided.

Further, a discrepancy between the number of steps of the stepper motor 43 requested by the control unit 21 and the number of actual steps detected by the encoder 44 may provide an indication for a malfunction of the apparatus, particularly occurrence of any mechanical blocking or a malfunction of any of the valves involved. Control unit 21 may be programmed to cease operation and request for servicing if a certain pre-programmed figure of a difference between the number of steps requested by the control unit 21 and the number of actually performed steps detected by the encoder 44 is exceeded. Such arrangement allows a long-term unattended operation for instance within a customer's plant, thereby insuring that a malfunction of the apparatus is detected and servicing of the apparatus requested only when required. This particularly helps to keep operating costs for the system as low as possible.

From an embodiment of the apparatus comprising only a small number of canisters 18, may be two canisters 18, the arrangement of figure 6 may be directly applied to the diaphragm pump 1, thus simplifying the apparatus and replacing all the transmission liquid circuitry by a linear drive arrangement as described before with reference to figure 6. Such an embodiment enables to provide dosing of a predetermined or selected dose of a product 16 from a multiplicity of supply sources 18 at low costs without significantly reducing reliability and accuracy of the dosing performance. A batch volume control means may be easily integrated into the control unit 21 by providing respective programming for the microcontroller means, allowing very accurate provision of a predetermined or pre-programmed dose of suspension 16 or of an individually selected dose as requested by the user of the equipment.

The operation of the system is as follows: when initially starting operation of the system, all dosing chambers 5 of diaphragm pumps 1 should be filled with their diaphragms 4 taking their initial positions 8. Further, transmission hosing 28, actuation hosing 30, valve chambers of valve means 27, actuation chambers 6 and working compartment 11 of master pump 12 should be filled with an appropriate amount of transmission liquid 9 providing the diaphragm 13 of the master pump 12 in its initial position 8 corresponding to the diaphragms 4 of the diaphragm pumps 1. Outlet valves 25 and filling valves 22 should be closed, and supply pumps 19 shut off. Valve means 27 should also be closed or providing fluid connection from the actuation hosing 30 to a transmission hosing 28 for one of the diaphragm pumps 1 at maximum.

A batch counter incorporated in the control unit 21 and readings of the flow meter 15, and, where applicable, settings of stepper motor 43 and encoder 44 should be reset. In the embodiment described with reference to figure 4, gas inlet valve 34 should be closed and ventilation valve 35 should be opened for venting the actuation side 14 of the diaphragm 13 to the environment.

On request of a user by selecting one of the supply sources through source selector 39 a pre-programmed or individually selected dose of suspension 16 is provided as follows. Control unit 21 operationally opens the respective valve means 27 to provide a fluid connection between master pump 12 and the diaphragm pump 1 of the selected source 18 of product 16. Further, respective outlet valve 25 is opened. In the arrangement shown in figure 4, the ventilation valve 35 is closed and gas inlet valve 34 opened in a controlled manner, thus allowing pressurised gas entering from the source of gas 32 into the portion for receiving pressurised gas on the actuation side 14 of the diaphragm 13 of the master pump 12. This causes a displacement of the diaphragm 13, and consequently a displacement of a certain volume of transmission liquid 9 from the working compartment 11 of the master pump 12. The displaced volume of transmission liquid 9 causes the diaphragm 4 of the respective dosing chamber 5 to displace, thus displacing exactly the same amount of suspension 16 from the dosing chamber 5 through outlet hosing 24 to output 26. Delivery of the dosed volume is monitored by the control unit 21 via reading respective data from the flow meter 15. Once the required volume of suspension batch is reached, outlet valve 25 and gas inlet valve 34 are closed, and ventilation valve 35 is opened to allow venting of the actuation side 14 of the diaphragm 13 of the master pump 12 to the environment. Delivery of product 16 through output 26 is ceased.

Refilling of the dosing chamber 5 is now performed by opening of the respective filling valve 22 and energising supply pump 19 to provide suspension 16 from the respective canister 18 into the dosing chamber 5. According to the volume of suspension 16 provided into the dosing chamber 5, the diaphragm 4 is moved from its final position 17 at the end of the dosing cycle towards its initial position 8, thereby displacing the respective amount of transmission liquid 9 from the actuation chamber 6 through hosing 10 including transmission hosing 28 and valve means 27, actuation hosing 30 and flow meter 15 into the working compartment 11 of the master pump 12. Diaphragm 13 of the master pump 12 is accordingly moved from its final position 17 at the end of the dosing cycle to its initial position 8 and gas from the actuation side 14 of the diaphragm 13 is vented through ventilation valve 35 to the environment.

The filling cycle is stopped on receiving respective information from the flow meter 15, causing the control unit 21 to de-energise supply pump 19, closing filling valve 22, and optionally valve means 27. The apparatus is now ready for performing the next dosing of a batch of product from a canister 18 selected by the user.

With respect to the embodiment shown in figure 5, instead of controlling the gas inlet valves 34 and the ventilation valve 35, the stepper motor 43 is controlled to displace the diaphragm 13 from its initial position 8 to its final position 17 during the dosing cycle and vice versa during the filling cycle.

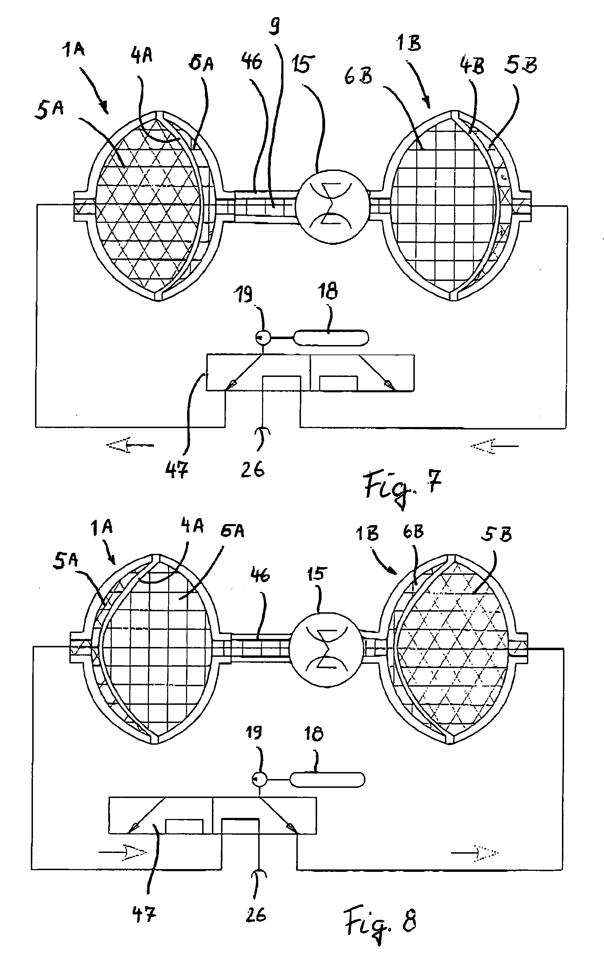

An alternative embodiment for dosing of a pre-determined or selected dose of a product in a form of a powdery material, a slurry, or suspension 16 from a supply source or canister 18 is shown in figures 7 and 8, respectively. Two diaphragm pumps 1A and 1B are arranged having each an actuation chamber 6A and 6 B, respectively, wherein both actuation chambers 6A and 6B are filled with a transmission liquid 9 and connected through connecting tubing 46 including a flow meter 15. Each of the dosing chambers 5A and 5B of the diaphragm pumps 1A and 1B are connected to a directional control valve 47, or particularly an electrically controlled solenoid 4/2 directional control switching valve. In each of the two positions of the directional control valve a supply source or canister 18 is connected via supply pump 19 with one of the dosing chambers 5A and 5B for filling operation, thereby displacing diaphragm 4A and 4B of the dosing chambers 5A and 5B. The same volume of product suspension 16 filled into the dosing chamber 5 is displaced from the actuation chamber 6 of the diaphragm pump 1 causing to act the diaphragm pump 1 as a master pump 12.

In figure 7 the pump 1A on the left hand side acts as the master pump 12 during filling of the dosing chamber 5A of the pump of the left hand side. Displaced transmission liquid 9 is metered by the flow meter 15 and enters the actuation chamber 6B of the pump 1B on the right hand side, thereby displacing the diaphragm 4B and ejecting the corresponding amount of suspension from the dosing chamber 5B. The outlet of the dosing chamber 5B is connected via the directional control valve 47 to an output 26 for providing the product as desired.

Although not shown, a control unit 21 may be involved as described with respect to the embodiments in figure 4 and 5. On metering of a certain volume through the flow meter 15 or other suitable way of detection the directional control valve 47 is actuated, thereby moving into the position shown in figure 8. Thereby the supply pump 19 and the supply source 18 is connected to the dosing chamber 5B of the right hand diaphragm pump 1B for filling of the dosing chamber 5B, thereby reversing the displacement of the transmission liquid 9 through the flow meter 15 into the actuation chamber 6A of the diaphragm pump 1A on the left hand side. Accordingly, a corresponding volume of suspension 16 is displaced from the dosing chamber 5A of the pump 1A on the left hand side and directed through the directional control valve 47 to the output 26.

Besides for the time needed for switching the directional control valve 47, this arrangement is not only useful for delivery a predetermined or selected batch volume of suspension 16 from the canister 18, but may also be involved for nearly continuously dosing of controlled amounts of product as well.

Description of certain of preferred exemplary embodiments of the invention above should not be considered as limiting the subject matter of the claims but are for illustration purposes of the invention only. Certain features may be combined with various embodiments as evident from the foregoing description.

## Claims

1. A method for volumetric dosing of a predetermined or selected dose of a product in the form of powdery material, a slurry, or a suspension (16) from a multiplicity of supply sources (18), using a multiplicity of dosing chambers (5), wherein at least one dosing chamber (5) is allocated to and in fluid communication with each supply source (18), and wherein one wall segment of each dosing chamber (5) is formed by a diaphragm (4), comprising the steps of
selecting a desired supply source (18),
displacing a diaphragm (4) from an initial position (8) providing a maximized volume of the dosing chamber (5) allocated to the selected supply source (18) towards a final position (17) in which the volume of the dosing chamber (5) is minimized, and thereby discharging the product (16) through an output (26), and
refilling the dosing chamber (5) with product (16) from the respective supply source (18), thereby returning the diaphragm (4) into its initial position (8).

2. Method according to claim 1, wherein the step of discharging the product (16) through an output (26) is subsequent to opening of an outlet valve (25).

3. Method according to claim 2, wherein the step of refilling the dosing chamber (5) with product (16) from the respective supply source (18) is subsequent to closing of the outlet valve (25) and opening of a filling valve (22).

4. Method according to any preceding claim, wherein the step of displacing the diaphragm (5) is performed by displacing a metered volume of a transmission liquid (9) into an actuation chamber (6) sealed by the diaphragm (4) of the respective dosing chamber (5).

5. Method according to claim 4, wherein the displaced volume of transmission liquid (9) is controlled to a predetermined or selected amount.

6. Method according to claim 5, wherein controlling of the discharged volume is performed by applying pressure to the transmission liquid (9) by providing a pressurized gas onto a diaphragm (13) inside an actuation device (12) divided by the diaphragm (13) into a portion (14) for receiving the pressurized gas and a portion (11) containing the transmission liquid (9), preferably wherein the provision of pressurized gas is controlled through a gas inlet valve (34) and a ventilation valve (35).

7. Method according to any of claims 1 to 3, wherein controlling of the discharged volume is performed by displacing the diaphragm (13) through a controlled linear drive (43, 7).

8. Method according to any of claims 1 to 3 and 7, wherein controlled displacement of the diaphragm (13) is performed by activating a stepper (43) motor in geared engagement with a rod (7) connected to the diaphragm (13) by a dedicated number of steps.

9. Method according to claim 8, wherein the number of steps is controlled by a microcontroller means, wherein between the outmost positions of the diaphragm (13) a volumetric amount of discharge is allocated to each dedicated step to a table of characteristic values stored in a memory device connected to the microcontroller means.

10. Method according to any of claims 7 to 9, wherein the discharged volume is a non-linear function of the number of steps of the stepper motor (43),
wherein the function is determined for each specific dosing chamber (5) and product from calibration and the obtained function is stored in the memory device in the form of a table of characteristic figures.

11. Method according to any preceding claim, further comprising the step of treating seeds with the product (16) dispensed through the output (26).

12. An apparatus for volumetric dosing of a predetermined or selected dose of a product in the form of a powdery material, a slurry, or a suspension (16) from a multiplicity of supply sources (18), comprising:
at least one diaphragm pump (1) per supply source (18),
wherein each diaphragm pump (1) is divided by a diaphragm (4) into a sealed dosing chamber (5) and an actuation chamber (6) opposite to the dosing chamber (5),
each dosing chamber (5) being in fluid communication with an outlet (26) and one of the supply sources (18),
at least one source selector (39) for selection of the desired supply source (18), and
means (32, 43, 9) for displacing the diaphragm (4) of the diaphragm pump (1) allocated to the selected supply source (18), thereby ejecting an amount of product (16) from the diaphragm pump (1) in response to the displacement of the diaphragm (5).

13. Apparatus according to claim 12, wherein the means for displacing the diaphragm (4) of the at least one diaphragm pump (1) further comprising:
a master pump (12) of the diaphragm type, having a working compartment (11) defined on one side of the diaphragm (13) and an actuation side (14) of the diaphragm (13) opposite to the working compartment (11),
a transmission liquid (9) in fluid connection with the actuation chamber (6) of any diaphragm pump (1) and working compartment (11) of the master pump (12),
valve means (27) for selectable fluid connection for the transmission liquid (9) between the working compartment (11) of the master pump (12) and the actuation chamber (6) of any of the diaphragm pumps (1) in response to the source selector (39), and
a flow meter (15) arranged between the working compartment (11) of the master pump (12) and the valve means (27).

14. Apparatus according to claim 12 or 13, further comprising for each diaphragm pump (1) an outlet valve (25) for connecting the dosing chamber (5) of a selected diaphragm pump (1) to an output (26) of the apparatus for discharging the dosed (16) product, and a filling valve (22) for each diaphragm pump (1) operable alternatively to the outlet valve (25), for connecting the dosing chamber (5) of the selected diaphragm pump (1) to the respective supply source (18).

15. Apparatus according to claim 13 or 14, further comprising a gas inlet valve (34) and a ventilation valve (35) connected to a compartment formed on the actuation side (14) of the diaphragm (13) of the master pump (12), the gas inlet valve (34) being operable for controlled connection to a source of pressurized gas (32), the ventilation valve (35) being operable to vent the said compartment (14) to the environment.

16. Apparatus according to claim 13 or 14, wherein the actuation side (14) of the diaphragm (13) of the master pump (12) is connected to a linear drive arrangement for controlled displacement of the diaphragm (13).

17. Apparatus according to claim 12, wherein the means for displacing the diaphragm (4) of the at least one diaphragm pump (1) is a linear drive arrangement for controlled displacement of the diaphragm (4).

18. Apparatus according to claim 16 or 17, wherein the linear drive arrangement comprises a stepper motor (43) and a rod (7) connected to the diaphragm (4, 13), wherein the stepper motor (43) is in geared engagement with the rod (7).

19. Apparatus according to claim 18, wherein the rod (7) comprises a tube like portion (39) internally threaded over at least part of its length, and a threaded bolt like portion (40), one of the tube like and bolt like portions (39, 40) being secured to the rotatable drive shaft (42) of the stepper motor (43) for rotating with the drive shaft (42), and the other of the tube like and bolt like portions (39, 40) being non-rotatably fixed to the diaphragm (4, 13) of the pump (1, 12), so as to obtain a defined linear displacement of the diaphragm (4, 13) in response to certain rotational steps of the stepper motor (43).

20. Apparatus according to claims 18 or 19, further comprising a microcontroller means for controlled driving of the stepper motor (43), and a memory device containing data of a table of characteristic figures for volume displacement in response to each step of the stepper motor (43) from the initial position (8) of the diaphragm (4, 13) to its final position (17).

21. Apparatus according to claim 20, further comprising an incremental rotary encoder (44) for detecting rotational movements of the drive shaft (42) and the portion of the rod (7) connected to the drive shaft (42), and electrically connected to the microcontroller means for monitoring appropriate rotation of the rod portion in response to the output signals of the microcontroller means for driving the stepper motor (43).

22. Apparatus according to claim 13, wherein the flow meter (15) is a volumetric flow meter of the positive displacement type.

23. Apparatus according to any of claims 13 to 22, further comprising a batch volume control means for controlling the displaced volume of transmission liquid.

24. Apparatus according to claim 23, wherein the batch volume control means is integrated into the microcontroller means.
